# EUROPEAN PATENT SPECIFICATION

(11) **EP 3 957 819 B1**
(45) Date of publication and mention of the grant of the patent: **27.03.2024**
(21) Application number: 19924702.4
(22) Date of filing: 21.10.2019
(51) Int. Cl.: E21B 47/095, G01V 1/50

(54) **METHOD FOR DETECTING SOLID PARTICLE ENTRAINMENT ZONES IN A WELL**
VERFAHREN ZUR DETEKTION VON FESTSTOFFMITNAHMEZONEN IN EINEM BOHRLOCH
PROCÉDÉ DE DÉTECTION DE ZONES D'ÉMISSION DE PARTICULES SOLIDES DANS UN PUITS

(30) Priority: 19.04.2019 EA 201900284
(43) Date of publication of application: 23.02.2022
(73) Proprietor: TGT OILFIELD SERVICES DMCC, Dubai, UAE PO Box 334585 (AE)
(72) Inventor: ARBUZOV, Andrey Alexandrovich, Respublika Tatarstan 420111 (RU); MASLENNIKOVA, Yuliya Sergeevna, Respublika Tatarstan 420057 (RU); DAVYDOV, Dmitry Alexandrovich, Respublika Tatarstan 420049 (RU); SPIRINA, Liliya Alexandrovna, Respublika Bashkortostan 452800 (RU)
(74) Representative: Fenix Legal KB
(86) International application number: PCT/RU2019/050192
(87) International publication number: WO 2020/214059

(56) References cited:
- WO-A1-2018/057029
- WO-A2-2017/174750
- EA-A1- 200 601 138
- RU-C1- 2 499 283
- RU-C1- 2 662 738
- US-A- 4 240 287
- US-A- 4 240 287
- US-A1- 2008 066 962
- PETER D THORNE: "The measurement of acoustic noise generated by moving artificial sediments", THE JOURNAL OF THE ACOUSTICAL SOCIETY OF AMERICA, AMERICAN INSTITUTE OF PHYSICS, 2 HUNTINGTON QUADRANGLE, MELVILLE, NY 11747, vol. 78, no. 3, 1 September 1985 (1985-09-01), page 1013, XP001422805, ISSN: 0001-4966

## Description

### Technical field

This invention relates to the petroleum industry. More particularly, the invention pertains to the method of detecting zones of solids (sand or proppant) production in a well where the solids are carried up by fluid or gas flows.

### Background art

The presence of sand in a flow of transported gas of fluid leads to excessive wear of the completion string shaped components. Timely detection of sand production in the wellbore offers a possibility to make prompt adjustments in the well flow regime, thereby preventing negative consequences, resulting in damage to bottomhole zone, and avoiding extra costs for well servicing and workovers.

There is a known method of sand detection using a fiber optic system disclosed in US Patent No. 20070047867A1 of 1 March 2017, titled Downhole Fiber Optic Acoustic Sand Detector. This system may include one or several acoustic sensors formed using lengths of optical fibers, constituting an interferometer with a fibre Bragg grating. Acoustic signal causes a change of the fiber -optic path in the interferometer, bringing about a change in optical intensity of light which is further on detected by appropriate electronic equipment. As sand enters the wellbore, the sonic profile in the wellbore will change. This change is analysed and identified using appropriate electronics.

The drawbacks are low sensitivity of the fiber optic system due to additional screen from the well medium, unavailability of reference sonic signature in the well with no sand production, and impossibility to count produced solid particles.

There is another method disclosed in Canadian Patent No. 3020223 of 12 October 2017, titled Detecting Downhole Sand Ingress Locations, which consists in detecting a broadband signal and comparing it with a reference signal measured with a fiber optic system. Detection of a broadband signal includes frequency filtration, and locating spectral centroid and spectral spread. Sand production in the wellbore is identified based on the fact that the centroid and spread are higher than the threshold values. The sand count at a certain depth in the wellbore is determined on the basis of spectral energy.

The drawbacks are low sensitivity, difficulties in selecting an optimal threshold, and inaccuracy in counting the sand particles produced to surface.

US Patent No. 6672131 of 6 January 2004, titled Method for Operating a Measurement Instrument, discloses a method of registering sand particles using a wellhead instrument containing an active sensor to transmit acoustic signals and a passive sensor to receive signals. Afterwards the transmitted pulse is compared with the received one and amplification settings are adjusted until a given ratio between the transmitted and received signals is obtained. The signal from the sensor passes through one or several frequency filters. The noise generated by fluid flow through a pipe is measured by sample testing or using a measuring system, either manually or automatically. Sand detection is based on a sharp increase of the noise generated by wellbore flow.

The drawbacks of the methods are lack of information about the sand producing zone location and amount of produced sand.

US Patent No. 5257530 of 2 November 1993, titled Acoustic Sand Detector for Fluid Flowstreams, discloses a method for determining the rate of sand production by a system having a metal probe interposed in a flow conduit or transmitting acoustic emissions created by particles impacting the probe. A detector with maximum sensitivity in the range of 300-800 kHz is installed on the outside of the flow line to receive acoustic signals generated by the probe. To detect sand particles, acoustic energy of the received signal is calculated and then compared with the threshold value. Sand grains mass is calculated from the energy of their acoustic impact.

The drawbacks of this method are the difficulty in selecting an optimal threshold and absence of information on sand production zone location.

The closest to the proposed method is the method of sand detection wherein sand grains come in contact with a piezoelectric element (US patent No. 4240287 of 23 December 1980, titled Sand Detection). After amplification the signal is sent to a frequency filter so that only those components of the amplified signal that have a frequency of 50-500 kHz can pass through. The peak value of the resulting electric output signal is found in the pulse height discriminator. When the peak value exceeds the preset level of discrimination, a standard output pulse exceeding the typical sand grain impact duration is generated and the number of pulses over a certain period of time are counted. At a given flow velocity, sand grains can be differentiated by their size on account of different pulse height ranges in the discriminator.

The drawbacks of the method are inaccuracy in determining particle size and locating sand production zone due to the absence of a method for differentiating sand grains moving in the wellbore from sand grains produced from the formation.

WO2018/057029A1 is considered the closest prior art and relates to a method of detecting sand production zones using an acoustic probe moved through the wellbore.The probe acquires acoustic signals and from those signals a feature is extracted. In particular, the step of extracting the feature comprises determining one or more of a spectral power density, time-frequency component, covariance matrix, or phase and magnitude patterns of the acoustic signals. Further examples of instruments and method for detecting sand production zones in a well are disclosed US2008/066962A1 and WO2017/174750A2.

### Essence of the invention

The object of the claimed invention to be accomplished by using the invention is to provide a new method of detecting sand production zones in a well.

Technical result of the claimed invention is an increased reliability of determining the presence of solid particles in well production.

Technical result of the claimed invention is achieved by the fact that the sand producing zone detection method includes stages at which at least one well operating regime is established, which is characterised by presence of flow carrying solid particles both in the wellbore and in one or more formations; at least one instrument for objective measurements of acoustic signal amplitude is run in or pulled out of a well, either at a constant speed or stopping at stations; acoustic signal amplitude is measured either at a station or during running in or pulling out of a well using at least one instrument for objective measurements of acoustic signal amplitude; acoustic signal amplitude measurement data are obtained and processed, detecting amplitude peaks in the registered acoustic signal; at each depth the peak shapes resulting from the measurements are compared with the reference one and only those peaks that correspond to solid particle impacts are discriminated; solid particles are counted; and the zone of solids production in the wellbore is identified.

In one embodiment of the claimed invention when measurements are performed during running in or pulling out of the well, the number of solid particles is counted at one-second intervals.

In another embodiment of the claimed invention when measurements are performed at stations, the number of solid particles is counted for each station.

In another embodiment of the claimed invention the duration of a stationary measurement is 10 seconds or more.

In another embodiment of the claimed invention the distance between stations is equal to the length of the instrument for objective measurement of acoustic signal amplitude.

In another embodiment of the claimed invention acoustic signal amplitude is measured simultaneously with three acoustic signal amplitude measuring instruments, the distance between stations being three times longer than the length of the instrument for objective measurement of acoustic signal amplitude.

In another embodiment of the claimed invention the instrument for objective measurement of acoustic signal amplitude is run in at a constant speed of maximum six meters per second for the instrument one metre long, using additional rubber centralisers.

In another embodiment of the claimed invention an additional surface sensor is installed to monitor solid particles carried up to surface.

One distinctive feature of the invention is that impacts of solid particles against the measuring instrument body can be discriminated from other types of impacts (gas or air bubble strikes, mechanical shocks) in time domain, thereby enhancing the accuracy of solids detection in the well.

Another distinctive feature of the invention is that the impacts of solid particles carried by fluid flow from the formation can be discriminated from the impacts of solid particles moving along the wellbore, thereby enhancing the accuracy of solid particles production zone detection and providing the desired technical result.

### Brief description of drawings

Details, features and advantages of this invention ensue from the following description of the embodiments of the claimed invention given in the following drawings:
Fig. 1 - Schematic representation of the measuring instrument deployment in a well;
Fig. 2 - Flowchart of sand detection method according to the invention;
Fig. 3 - 30/60 mesh proppant;
Fig. 4 - Oscillogram of one 30/60 mesh proppant particle impact with measuring instrument body;
Fig. 5 - 20/40 mesh proppant;
Fig. 6 - Oscillogram of one 20/40 mesh proppant particle impact with measuring instrument body;
Fig. 7 - Oscillogram of an air bubble collapse upon impact with measuring instrument body;
Fig. 8 - Laboratory test unit schematic;
Fig. 9 - Result of applying the proposed method of sand production zone detection on the laboratory test unit;
Fig. 10- Result of applying the proposed method of sand production zone detection on the laboratory test unit;
Fig. 11 - Result of applying the proposed method of sand production zone detection in a production well in one operating regime;
Fig. 12 - Result of applying the proposed method of sand production zone detection in a production well in two operating regimes;
Fig. 13 - Result of applying the proposed method of sand production zone detection in a production well during continuous logging;

*The following items are marked with numbers in the* *figures: 1**- Measuring instrument; 2 - well; 3* - *cable; 4* - *sheave; 5* - *tilt gear; 6* - *measuring unit; 7* - *pipe; 8* - *holding tank for solid particles; 9* - *motor; 10* - *pure fluid (liquid or gas) feed tube; 11* - *dispenser; 12* - *pipe hole; 13* - *acoustic log; 14* - *energy panel; 15* - *low-energy particles; 16* - *solid particle count column; 17* - *temperature column; 18* - *broadband signal; 19* - *broadband signal; 20- broadband signal; 21* - *broadband signal; 22 -broadband signal; 23* - *broadband signal; 24* - *broadband signal; 25* - *broadband signal.*

### Disclosure of invention

The method of detecting solid particle production zones in a well is accomplished on the basis of discriminating solid particle impacts with a measuring instrument body from other types of impacts (gas or air bubbles, mechanical shocks) in time domain.

The proposed solids production zone detection method comprises the following:
Setting at least one well operating regime characterised by the presence of fluid flow carrying solid particles (sand or proppant) both along the wellbore or in one or more reservoir zones;
Measuring the amplitude of acoustic signals generated by fluid flow through the reservoir;
Detecting amplitude peaks of the registered acoustic signal;

Comparing the resulting peak shapes at each depth with the reference one and discriminating those peaks that correspond to solid particle impacts, counting solid particles, and identifying sand production zone.

Increasing the number of regimes to more than one will only enhance the accuracy of results.

An additional solid particle surface detector is installed for additional monitoring of solid particles and selecting an optimal operating regime.

One distinctive feature of the invention is that impact of solid particles with a measuring instrument body can be discriminated from other types of impact (gas or air bubble strikes, mechanical shocks) thereby enhancing the reliability of sand detection in the well. Solid particle impacts are discriminated in time domain by comparing the reference peaks caused by solid particle (sand or proppant) impacts with the peaks that have been detected in the data using the machine learning method.

Reference peaks from solid particle (sand or proppant) impacts are recorded in advance in laboratory conditions.

Another distinctive feature of the invention is that the impacts of solid particles carried by fluid flow from the formation can be discriminated from the impacts of solid particles moving along the wellbore, thereby enhancing the reliability of sand production zone detection and providing the desired technical result. This is achieved by estimating the energy of solid particle impacts with the measuring instrument body and comparing it with reference values. The energy of particles carried out in fluid from the formation will be higher than the energy of particles moving along the wellbore.

In further detail the method of sand production zone detection includes setting at least one well operating regime characterised by the presence of fluid flow carrying solid particles (sand or proppant) both along the wellbore and in one or more reservoir zones.

Measurements using the instrument for objective measurement of acoustic signal amplitude are performed while the instrument is run in the hole, remains at a station, or pulled out of the hole.

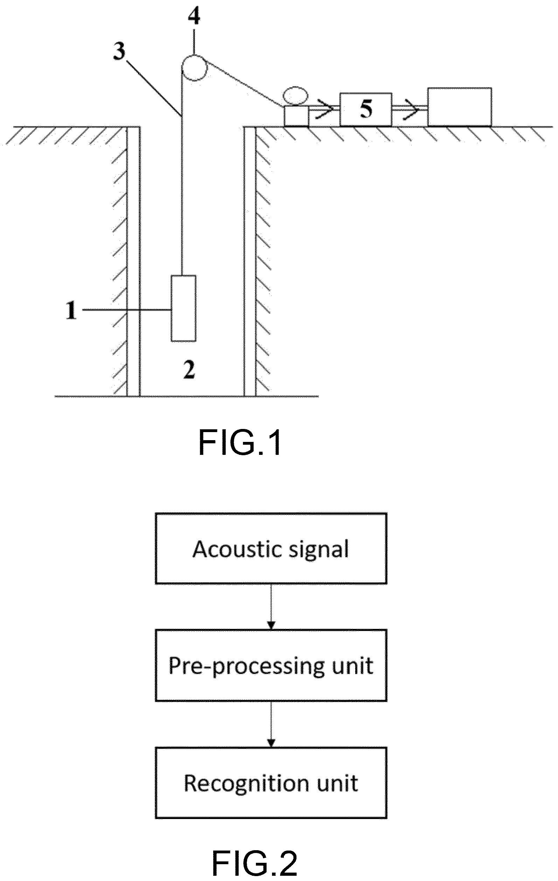

Fig. 1 shows a schematic representation of measuring instrument (1) deployment in the well (2). The instrument (1) position inside the well (2) is adjusted by the cable (3) which is positioned above the sheave (4) and connected to the tilt gear (5).

Measurements can be taken while the instrument is being run in or pulled out of the hole, or at stations, while running the instrument in or pulling out of the hole. Stationary measurements are preferable because in this case any noise generated by the instrument motion will be naturally excluded.

Duration of a stationary measurement can be 10 seconds or more. The minimum detectable amount of sand depends on the duration of a stationary measurement. A time interval of 10 seconds is the minimum time at a station that the hoisting equipment currently in use can provide. This being the case, the number of solids particles reliably detected by this instrument will be 1 particle per 10 seconds (0.1 particle per second).

The recommended distance between stations is equal to the length of measuring equipment to cover the entire depth range. However, this distance can be made either shorter or longer, depending on the total survey time, because the entire instrument body is sensitive to solid particle impacts. It should be noted that several instruments for measurement of acoustic signal amplitude can be used simultaneously during the survey, and in this case the distance between stations can be increased proportionally to the number of instruments (for example, if three instruments are used at the same time, the distance between stations should be increased to three lengths of the measuring equipment).

When the survey is conducted at a constant speed (during continuous logging), a speed limit of, e.g. six metres per minute, must be observed. Logging speed also has an effect on the minimal number of detectable solid particles. The allowed constant logging speed is determined according to the measuring equipment length. For example, if the measuring instrument is 1 metre long, the constant logging speed of 6 metres per second will be equivalent to a 10-second stationary measurement, which is sufficient for reliable detection of the number of solid particles in downhole flow at a rate of 0.1 particle per second or higher. Rubber centralisers can be used during the survey, in order to diminish acoustic noise generated by the instrument friction against the wellbore walls.

The source data recorded by the instrument for objective measurement of acoustic signal amplitude should be processed in time domain to detect a sand production zone in the well.

A flow diagram of the proposed method is given in Fig. 2. Initially, the source data are sent to the pre-processing unit. The pre-processing phase may include peak detection or feature extraction, or both peak detection and feature extraction at the same time.

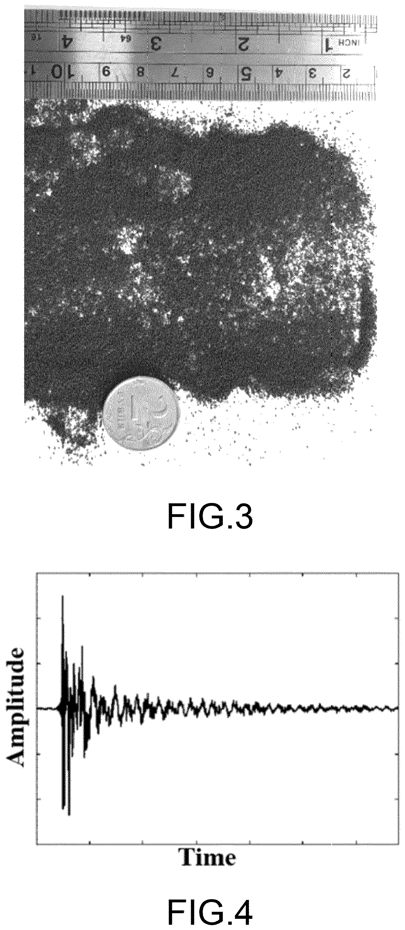

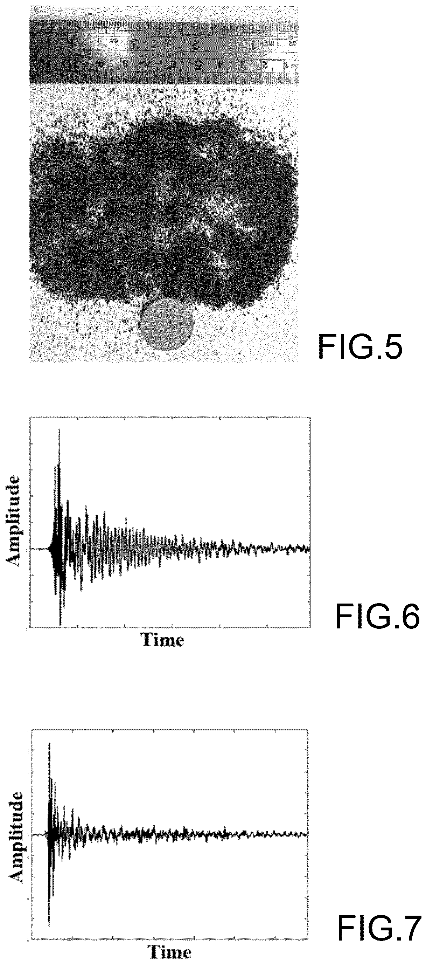

A peak is generated upon collision of solid particles (sand or proppant) with the measuring instrument body. Fig. 4 and Fig. 5 show peaks generated by impacts of one 30/60 mesh (Fig. 3) and one 20/40 mesh (Fig. 5) proppant particle with the tool body. In the process of peak detection the initial and final peak points are identified in a large dataset, which allows segmenting and isolating the peaks of interest. Detection can be performed using different methods, such as fractal analysis, wavelet transformation, or spectral analysis (acoustic energy, allocated frequency band). This phase may be omitted, and in this case all measured acoustic data will be sent to the recognition unit.

Acoustic characteristics of the peaks can be extracted and represented in a compact form by selecting certain features. Such characteristics as mel-cepstral coefficients, line spectrum pairs, cepstral linear prediction coefficients, spectral centroid and spectral spread, autoregressive model coefficients, momentary energy, formant frequencies, pitch frequency or zero-crossing frequency may serve as such features. If this stage is omitted, source acoustic data will be sent to the recognition unit. The recognition unit recognises the sound generated by a sand grain impact, using, for example, the machine learning method. This unit is an important part of the detection method because it separates the peaks caused by solid particles impacts (sand or proppant) (Fig. 4 and 6) with the measuring instrument body from other peaks (gas or air bubble strikes, mechanical shocks) (Fig. 7). The recognition process can be carried out using support vector machines, nearest neighbour method, artificial neural networks, or hidden Markov models.

After recognition the solid particles are counted and visualised as a graph with depth measured on the vertical axis and rate of particles per second on the horizontal axis. If the downhole measurements were taken during continuous logging, the number of particles is counted for each second. If the downhole measurements were taken at stations, the number of particles is counted for each station.

If the downhole measurements were taken at stations, for accurate identification of solids production zone an energy panel can be plotted and visualised as a colour panel where depth is measured on the vertical axis and time on the horizontal axis, and colour represents particle energy (from light colour of lower energy to dark colour of higher energy). Energy is estimated for each detected peak caused by a solid particle impact. Then the estimated energies are averaged within one-second limit.

This procedure is to be performed for each well operating regime.

### Case study 1

Detecting sand production zones on a laboratory test unit simulating a fluid flow carrying solid particles.

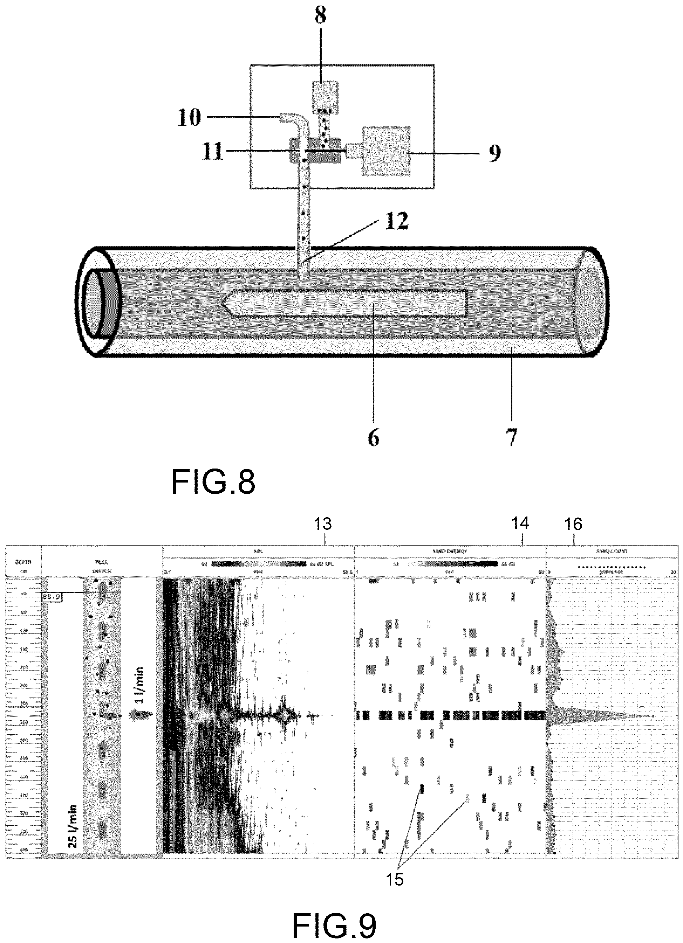

The laboratory test unit schematic is shown in Fig. 8.This is a pipe (7) of 88.9 mm in diameter and 6 m long in which the measuring instrument (6) is placed. A required quantity of particles is transported by motor (9) from holding tank (8) to dispenser (11) at a specified rate. In the dispenser the particles are mixed with fluid or gas flow arriving from pure fluid feed tube (10). Then the particles are carried by fluid into pipe (12) through a 14 mm hole that simulates a downhole perforation.

During the test the water flow rate inside the pipe was 25 l/min and a mixture of water and 20/40 mesh solid particles (proppant) was injected through the hole at a rate of 1 l/min. The average solids production rate was 16 sand grains per second.

A downhole acoustic logging tool was used as the instrument for objective measurement of acoustic signal amplitude. As per the technology, at the first stage downhole acoustic logging measurements were taken at stations. Then, at the second stage, the source acoustic data (Fig. 9) were processed.
The spectral acoustic log panel (13) shows a low-frequency acoustic signal generated by water flow along the pipe and a noise peak at the hole through which water with solid particles is coming. As a result, energy panel (14) showed that the most frequent and high-energy peaks caused by solid particle impacts with the downhole acoustic logging tool occurred at the hole from which solid particles entered the pipe. The detected particles visible on the energy panel above and below the hole (15) indicate low-energy collisions of the particles with the downhole acoustic logging tool, but only in the flow inside the pipe. The solid particle count column (16) shows that the sand production zone is at the depth of the hole through which sand entered the pipe.

### Case study 2

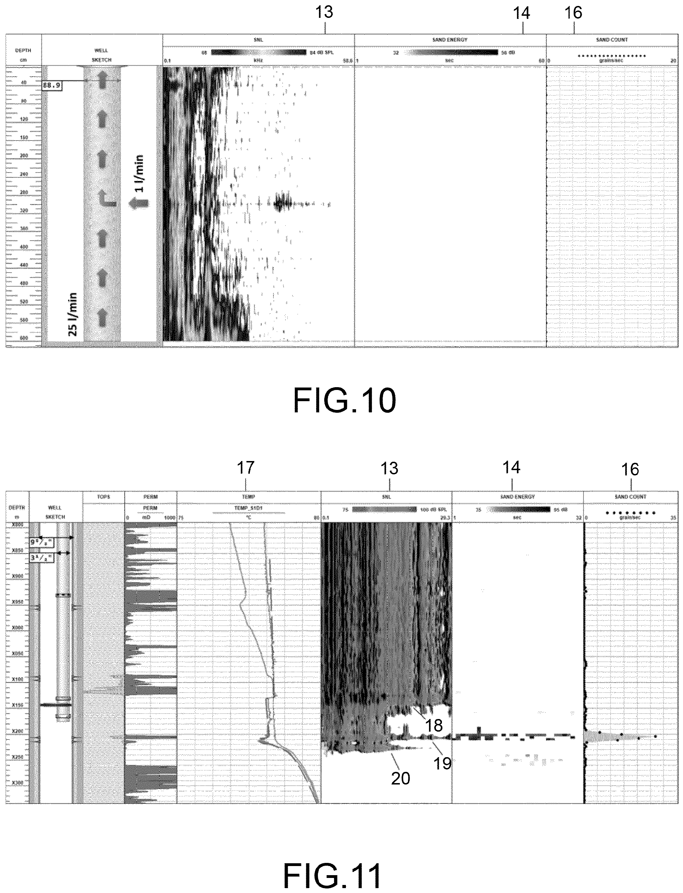

Detecting sand production zones on a laboratory unit simulating a fluid flow without solid particles (Fig. 10).

During the test the water flow rate inside the pipe was 25 l/min and pure water was injected through the hole at a rate of 1 l/min.

Downhole logging measurements were taken at stations and source acoustic data were processed according to the procedure described in Case Study 1. The spectral acoustic log panel (13) shows a low-frequency acoustic signal generated by water flow along the pipe and a noise peak at the hole through which water without solid particles entered the pipe. The proposed method detected no solid particles during this test. The solid particle count column (16) shows zero at all stations and the energy panel (14) is empty.

### Case Study 3

Sand production zone detection in a production well in one operating regime.

This case study relates to an oilfield in Malaysia. A multiphase producer was surveyed in one operating regime. Production rates at surface conditions were: 131,390 m³/day of gas, 41 m³/day of oil, and 392 m³/day of water. Sand production rate according to surface data was 44 sand grains per second.

As per the technology, at the first stage one downhole acoustic logging tool was run to take measurements at stations. Accordingly, the distance between stations was equal to the acoustic logging tool length which was 1 metre. Then, on the second stage, the source acoustic data (Fig. 11) were processed. According to temperature logs (17) and broadband signals (18, 19, 20) on acoustic logging panel (13), there are three main fluid entry zones.

Based on the proposed method, a sand production zone was detected (medium broadband signal 19). The solid particle energy panel (14) shows frequent high-energy impacts of solid particles in this zone at a rate of 27 particles per second (solid particle count column 16). The energy panel (14) shows low-energy solids impacts occurring below the sand production zone, which is due to settling of some part of produced sand on the well bottom and their collisions with the instrument body.

### Case Study 4

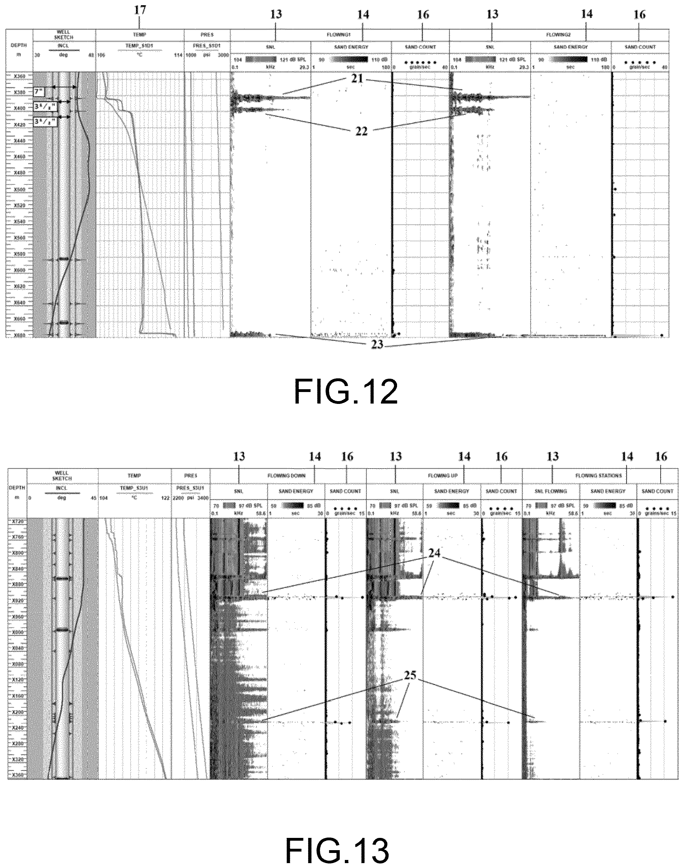

Sand production zone detection in a production well in two operating regimes (Fig. 12). This case study relates to an oilfield in Indonesia where a producer was surveyed in two operating regimes. Production rates at bottomhole conditions in the first regime were: gas - 0.727 MMCFD, water - 170 BWD, and oil - 7.2 BOD. Production rates at bottomhole conditions in the second regime were: gas - 0.857 MMCFD, water - 176.6 BWD, and oil - 8.9 BOD. Sand production rate according to surface data was 20 grains per second in the first regime and 80 grains per second in the second regime.

At the first stage, two downhole acoustic logging tools were run to take measurements at stations in each well operating regime. The distance between stations was 2 metres and, as a result, the survey was completed two times faster. At the second stage, the data recorded by both acoustic logging tools in each regime were combined and processed. According to temperature logs (17) and broadband signals (21, 22, 23) there are three main fluid entry zones as can be seen on the acoustic logging panel (13) that contains logs recorded in both regimes (13).

Based on the proposed method, a solids production zone was detected (lower signal 23). The maximum sand production rate of 5 grains per second was detected in the first well operating regime (sand count column 16), while in the second regime, as shown in the solid particle energy panel (14), high-energy impacts of solid particles occurred in the sand production zone almost every second at a rate of 32 particles per second (solid particle count column 16). Above the sand production zone some particles carried by wellbore flow were detected, although they had a lower energy and were produced at a lower rate.

### Case Study 5

Sand production zone detection in a production well during continuous logging.

This case study relates to an oilfield in Indonesia. Where a producer was surveyed with one downhole acoustic logging tool first during continuous logging on up and down passes at a speed of 2 metres per minute using rubber centralisers, and then at stations. Production rates at surface conditions in these operating regimes were: gas - 2.881 MMCFD, oil - 52.4 BOD, and water - 1556 BWD. Sand production rate according to surface data was 20 grains per second in this operating regime.

First the measurements were taken on the up and down passes and then at stations spaced 1 metre apart. After that, the source acoustic data (Fig. 13) were processed. According to the spectral acoustic log panels (13) all measurements showed that there were seven flowing zones but only two of those zones that were identified using the proposed method were producing sand. The upper zone (24) produced 12 sand grains per second on the average (sand count column 16) and the lower zone (broadband signal 25) 7 sand grains per second (16). Both above and below the sand production zones some solid particles carried by wellbore flow were detected, although they had a lower energy (energy panel 14), and were fewer.

## Claims

1. A method of detecting sand production zones in a well (2), including the following phases:
At least one well operating regime is established, wherein a fluid flow is present, said fluid flow carrying solid particles either along the wellbore or in one or more formations;
At least one instrument (1) for objective measurements of acoustic signal amplitude is run in or pulled out of the well (2) either at a constant speed or stopping at stations;
Acoustic signal amplitude is measured either at a station or during running in or pulling out of the well (2) using the at least one instrument (1) for objective measurements of acoustic signal amplitude;
The acoustic signal amplitude measurement data obtained in the well (2) are processed, detecting amplitude peaks in the registered acoustic signal, the amplitude peaks being generated upon collision of the solid particles with the at least one instrument (1);
At each depth, the amplitude peaks resulting from the measurements are compared with reference peaks recorded in advance in laboratory conditions and only those amplitude peaks that correspond to solid particle impacts are discriminated, the solid particle impacts against the instrument (1) being discriminated from other types of impacts in time domain;
The solid particle impacts carried by the fluid flow from the one or more formations is discriminated from the solid particle impacts moving along the well (2), the energy of the solid particle impacts being estimated by the instrument (1) and compared with reference values, wherein the energy of the solid particles carried out in the fluid flow from the one or more formations is higher than the energy of the solid particles moving along the well (2);
Solid particles are counted;
And zone of solids production in the wellbore is identified.

2. A method according to Claim 1 **characterised in that** during downhole logging on a down pass or on an up pass the number of solid particles is estimated at one-second intervals.

3. A method according to Claim 1 **characterised in that** during downhole logging at stations the number of solid particles is estimated for each station.

4. A method according to Claim 1 **characterised in that** the duration of a measurement at a station is 10 seconds or longer.

5. A method according to Claim 1 **characterised in that** the distance between stations is equal to the length of the instrument (1) for objective measurement of acoustic signal amplitude.

6. A method according to Claim 1 **characterised in that** acoustic signal amplitude is measured simultaneously with three acoustic signal amplitude measuring instruments, the distance between stations being three times longer than the length of the instrument (1) for objective measurement of acoustic signal amplitude.

7. A method according to Claim 1 **characterised in that** the instrument (1) for objective measurement of acoustic signal amplitude is run in or pulled out at a constant speed of maximum six meters per second for the instrument one metre long, using additional rubber centralisers.

8. A method according to Claim 1 **characterised in that** an additional surface sensor is installed to monitor solid particles carried up to surface.

## Patentansprüche

1. Eine Methode zur Erkennung von Sandproduktionszonen in einem Bohrloch (2), einschließlich der folgenden Phasen:
Es wird mindestens ein Bohrlochbetriebsregime eingerichtet, bei dem ein Fluidstrom vorhanden ist, wobei der Fluidstrom Feststoffpartikel entweder entlang des Bohrlochs oder in einer oder mehreren Formationen transportiert;
Mindestens ein Instrument (1) zur objektiven Messung der akustischen Signalamplitude wird entweder mit konstanter Geschwindigkeit oder an Stationen in das Bohrloch hineingefahren oder daraus herausgezogen (2).
Die akustische Signalamplitude wird entweder an einer Station oder während des Einfahrens gemessen oder Herausziehen des Bohrlochs (2) unter Verwendung des mindestens einen Instruments (1) zur objektiven Messung der akustischen Signalamplitude;
Die im Bohrloch (2) gewonnenen Messdaten der akustischen Signalamplitude werden verarbeitet, wobei Amplitudenspitzen im registrierten akustischen Signal erfasst werden, wobei die Amplitudenspitzen bei Kollision der Feststoffpartikel mit dem mindestens einen Instrument (1) erzeugt werden;
In jeder Tiefe werden die aus den Messungen resultierenden Amplitudenspitzen mit Referenzspitzen verglichen, die zuvor unter Laborbedingungen aufgezeichnet wurden, und es werden nur die Amplitudenspitzen unterschieden, die den Stößen fester Partikel entsprechen, wobei die Stöße der festen Partikel gegen das Instrument (1) von anderen unterschieden werden Arten von Auswirkungen im Zeitbereich;
Die vom Fluidstrom aus einer oder mehreren Formationen getragenen Feststoffpartikelstöße werden von den Feststoffpartikelstößen, die sich entlang des Bohrlochs bewegen (2), unterschieden, wobei die Energie der Feststoffpartikelstöße vom Instrument (1) geschätzt und mit Referenzwerten verglichen wird , wobei die Energie der Feststoffpartikel, die im Fluidstrom aus der einen oder mehreren Formationen befördert werden, höher ist als die Energie der Feststoffpartikel, die sich entlang des Bohrlochs (2) bewegen;
Feste Partikel werden gezählt;
Und die Zone der Feststoffproduktion im Bohrloch wird identifiziert.

2. Verfahren nach Anspruch 1, **dadurch gekennzeichnet, dass** während der Bohrlochmessung bei einem Abwärtsdurchgang oder bei einem Aufwärtsdurchgang die Anzahl der Feststoffpartikel in Intervallen von einer Sekunde geschätzt wird.

3. Verfahren nach Anspruch 1, **dadurch gekennzeichnet, dass** während der Bohrlochmessung an Stationen die Anzahl der Feststoffpartikel für jede Station geschätzt wird.

4. Verfahren nach Anspruch 1, **dadurch gekennzeichnet, dass** die Dauer einer Messung an einer Station 10 Sekunden oder länger beträgt.

5. Verfahren nach Anspruch 1, **dadurch gekennzeichnet, dass** der Abstand zwischen Stationen gleich der Länge des Instruments (1) zur objektiven Messung der akustischen Signalamplitude ist.

6. Verfahren nach Anspruch 1, **dadurch gekennzeichnet, dass** die akustische Signalamplitude gleichzeitig mit drei Instrumenten zur Messung der akustischen Signalamplitude gemessen wird, wobei der Abstand zwischen den Stationen dreimal länger ist als die Länge des Instruments (1) zur objektiven Messung der akustischen Signalamplitude.

7. Verfahren nach Anspruch 1, **dadurch gekennzeichnet, dass** das Instrument (1) zur objektiven Messung der akustischen Signalamplitude mit einer konstanten Geschwindigkeit von maximal sechs Metern pro Sekunde bei einem Meter langen Instrument unter Verwendung zusätzlicher Gummizentrierer eingefahren oder herausgezogen wird .

8. Verfahren nach Anspruch 1, **dadurch gekennzeichnet, dass** ein zusätzlicher Oberflächensensor installiert wird, um an die Oberfläche beförderte Feststoffpartikel zu überwachen.

## Revendications

1. Procédé de détection de zones de production de sable dans un puits (2), comprenant les phases suivantes:
Au moins un régime de fonctionnement de puits est établi, dans lequel un écoulement de fluide est présent, ledit écoulement de fluide transportant des particules solides soit le long du puits de forage, soit dans une ou plusieurs formations;
Au moins un instrument (1) de mesure objective de l'amplitude du signal acoustique est introduit ou retiré du puits (2), soit à vitesse constante, soit en s'arrêtant aux stations.
L'amplitude du signal acoustique est mesurée soit au niveau d'une station, soit pendant le rodage ou extraction du puits (2), à l'aide du ou des instruments (1) pour des mesures objectives de l'amplitude du signal acoustique;
Les données de mesure d'amplitude de signal acoustique obtenues dans le puits (2) sont traitées, détectant des pics d'amplitude dans le signal acoustique enregistré, les pics d'amplitude étant générés lors d'une collision des particules solides avec ledit au moins un instrument (1);
A chaque profondeur, les pics d'amplitude résultant des mesures sont comparés aux pics de référence enregistrés au préalable dans des conditions de laboratoire et seuls les pics d'amplitude correspondant à des impacts de particules solides sont discriminés, les impacts de particules solides contre l'instrument (1) étant discriminés des autres types d'impacts dans le domaine temporel;
Les impacts de particules solides transportés par l'écoulement de fluide provenant de la ou des formations sont distingués des impacts de particules solides se déplaçant le long du puits (2), l'énergie des impacts de particules solides étant estimée par l'instrument (1) et comparée à des valeurs de référence, dans lequel l'énergie des particules solides transportées dans l'écoulement de fluide provenant de la ou des formations est supérieure à l'énergie des particules solides se déplaçant le long du puits (2);
Les particules solides sont comptées;
Et la zone de production de solides dans le puits de forage est identifiée.

2. Procédé selon la revendication 1, **caractérisé en ce que** lors d'une diagraphie en fond de trou, en descente ou en montée, le nombre de particules solides est estimé à intervalles d'une seconde.

3. Procédé selon la revendication 1 **caractérisé en ce que** lors de la diagraphie en fond de trou aux stations, le nombre de particules solides est estimé pour chaque station.

4. Procédé selon la revendication 1, **caractérisé en ce que** la durée d'une mesure à une station est de 10 secondes ou plus.

5. Procédé selon la revendication 1, **caractérisé en ce que** la distance entre les stations est égale à la longueur de l'instrument (1) de mesure objective de l'amplitude du signal acoustique.

6. Procédé selon la revendication 1 **caractérisé en ce que** l'amplitude du signal acoustique est mesurée simultanément avec trois instruments de mesure de l'amplitude du signal acoustique, la distance entre les stations étant trois fois plus longue que la longueur de l'instrument (1) de mesure objective de l'amplitude du signal acoustique.

7. Procédé selon la revendication 1, **caractérisé en ce que** l'instrument (1) de mesure objective de l'amplitude du signal acoustique est introduit ou retiré à une vitesse constante de maximum six mètres par seconde pour l'instrument d'un mètre de long, à l'aide de centreurs supplémentaires en caoutchouc.

8. Procédé selon la revendication 1, **caractérisé en ce qu'** un capteur de surface supplémentaire est installé pour surveiller les particules solides transportées vers la surface.
